(19) Europäisches Patentamt

European Patent Office

Office européen des brevets

(11) **EP 1 563 892 A1**

(12) **EUROPEAN PATENT APPLICATION**

(43) Date of publication:
**17.08.2005 Bulletin 2005/33**

(51) Int Cl.⁷: **B01D 53/94**, F01N 3/08

(21) Application number: **05002801.8**

(22) Date of filing: **10.02.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | • **Kitahara, Yuichi c/o Hitachi Ltd Int. Prop. Group Chiyoda-ku Tokyo 100-8220 (JP)**<br>• **Inoue, Takeshi c/o Hitachi Ltd Int. Prop. Group Chiyoda-ku Tokyo 100-8220 (JP)**<br>• **Hiratsuka, Toshifumi c/o Hitachi Ltd I. P. Group Chiyoda-ku Tokyo 100-8220 (JP)** |
| (30) Priority: **12.02.2004 JP 2004034752** | • **Watanabe, Hiroko c/o Hitachi Ltd Int. Prop. Group Chiyoda-ku Tokyo 100-8220 (JP)** |
| (71) Applicant: **Hitachi Ltd.**<br>**Tokyo 100-8280 (JP)** | • **Iizuka, Hidehiro c/o Hitachi Ltd Int. Prop. Group Chiyoda-ku Tokyo 100-8220 (JP)** |
| (72) Inventors:<br>• **Shinotsuka, Norihiro c/o Hitachi Ltd I. P. Group Chiyoda-ku Tokyo 100-8220 (JP)**<br>• **Kuroda, Osamu c/o Hitachi Ltd Int. Prop. Group Chiyoda-ku Tokyo 100-8220 (JP)** | (74) Representative: **Beetz & Partner Patentanwälte Steinsdorfstrasse 10 80538 München (DE)** |

(54) **Apparatus and method for purifying exhaust gas of internal combustion engine**

(57)  The invention relates to an exhaust gas purifying apparatus provided with a lean NOx catalyst (3) supporting a catalyst layer, which contains a NOx trapping component, on a honeycomb substrate formed so as not to cause an alkali attack. The invention prevents trapped NOx from being dissociated and exhausted during the time of a rich spike. A NOx reducing catalyst (4) with the function of reducing NOx by a reductant in a rich or stoichiometric condition, e.g., a three-way catalyst, is disposed downstream of the lean NOx catalyst (3). In the case of increasing the amount of the NOx trapping component in the lean NOx catalyst (3) to enhance a NOx trapping capability, even if a part of trapped NOx is dissociated during the time of the rich spike, the dissociated NOx can be reduced by the NOx reducing catalyst (4) disposed on the downstream side.

FIG. 2

# EP 1 563 892 A1

**Description**

BACKGROUND OF THE INVENTION

1. Field of the Invention

The present invention relates to an apparatus and a method for purifying exhaust gas exhausted from an internal combustion engine that is operated in a lean atmosphere.

2. Description of the Related Art

A lean NOx catalyst is known as a catalyst for effectively purifying nitrogen oxides (hereinafter referred to as "NOx") contained in exhaust gas in which oxygen is also contained. One known example of the lean NOx catalyst is a NOx trapping type catalyst that traps and reduces NOx contained in exhaust gas with absorption, adsorption and other reactions.

The lean NOx catalyst of the NOx trapping type contains, in a catalyst layer, a NOx trapping component and a NOx reducing component. Examples generally used as the NOx trapping component are alkali metals, such as lithium (Li), sodium (Na), potassium (K), and cesium (Cs), which are highly basic and belong to group IA of the Periodic Table. Also, examples generally used as the NOx reducing component are noble metals, such as platinum (Pt), rhodium (Rh), and palladium (Pd).

However, the lean NOx catalyst containing the alkali metal element has a problem of causing an alkali attack phenomenon. The term "alkali attack phenomenon" means a phenomenon that the alkali metal in the catalyst layer drifts into a substrate. The lean NOx catalyst is usually of a structure in which the catalyst layer is supported on a honeycomb substrate made of cordierite. The cordierite contains, as one component, silicon (Si) that tends to very easily bind with the alkali metal. Accordingly, when a heat load is applied to the lean NOx catalyst, the alkali metal drifts into the cordierite and the alkali attack phenomenon occurs.

The occurrence of the alkali attack phenomenon reduces the amount of the alkali metal present in the catalyst layer and hence deteriorates the NOx trapping capability of the catalyst. Further, the strength of the honeycomb substrate is reduced due to a resulting chemical change in composition of the cordierite.

In order to suppress the alkali attack phenomenon, it has been proposed to form the honeycomb substrate by using a material that contains no Si (see, e.g., JP-A-10-165817 (abstract and claims)).

SUMMARY OF THE INVENTION

The alkali attack phenomenon can be suppressed by using the honeycomb substrate that has a low affinity with the alkali metal. If the alkali attack phenomenon does not occur, a reduction in the strength of the honeycomb substrate resulting from the alkali attack phenomenon can be avoided. It is therefore possible to increase the amount of the alkali metal supported on the lean NOx catalyst, and to enhance the NOx trapping capability of the catalyst.

Meanwhile, the inventors have found that the following problem arises in the case of increasing the amount of the alkali metal supported on the lean NOx catalyst and enhancing the NOx trapping capability of the catalyst. More specifically, when the trapped NOx is reduced with the operation atmosphere changed over to a stoichiometric or rich state, this process relatively easily causes a phenomenon that a part of the trapped NOx is dissociated from the catalyst due to heat generated from the reduction reaction, etc. while it remains not reduced. Such a NOx dissociation phenomenon is apt to occur particularly in a state that a large mount of NOx is trapped by the lean NOx catalyst, or in a state that the temperature of exhaust gas is high and the NOx trapping capability of the catalyst is reduced.

The term "dissociation" used herein means that the NOx trapped by the catalyst with adsorption, absorption, occlusion and other reactions is detached from the catalyst when the NOx is reduced in the stoichiometric or rich state. With regards to a NOx absorbing type catalyst, the word "release" is often used as representing the meaning in contrast with "absorption", and the "release" is also included in the category of the "dissociation".

In an exhaust gas purifying apparatus provided with a lean NOx catalyst having a honeycomb substrate which totally does not cause or hardly causes the alkali attack phenomenon, it is an object of the present invention to overcome the problem of dissociation of NOx occurred when an operation atmosphere is changed over to reduce trapped NOx.

To achieve the above object, an exhaust gas purifying apparatus according to the present invention may include, in an exhaust passage of an internal combustion engine, a lean NOx catalyst having the function of trapping NOx in a lean atmosphere under coexistence of oxygen and including a catalyst layer that has the function of reducing the trapped NOx by a reductant in a rich or stoichiometric atmosphere and is supported on a honeycomb substrate having a low affinity with components of the catalyst layer, and/or a NOx reducing catalyst disposed downstream of the lean NOx catalyst and having the function of reducing NOx by a reductant in the rich or stoichiometric atmosphere.

In the present invention, the term "catalyst layer" means a state in which catalyst active components including a NOx trapping component and a NOx reducing component are supported on a support made of, e.g., alumina.

The exhaust gas purifying apparatus of the present invention may further comprise a pre-catalyst, which is constituted as a three-way catalyst, upstream of the lean NOx catalyst. Alternatively, the exhaust gas purifying apparatus may further comprise a filter for trapping and removing particulates upstream or downstream of the lean NOx catalyst.

A exhaust gas purifying method of the present invention comprises the steps of trapping NOx contained in the exhaust gas in the lean atmosphere and removing the NOx from the exhaust gas by the lean NOx catalyst having the above-described structure, and then changing over an operation atmosphere to the rich or stoichiometric atmosphere, thereby reducing NOx dissociated from the lean NOx catalyst with the changeover of the operation atmosphere into nitrogen ($N_2$) by the NOx reducing catalyst.

The present invention is applicable to any kind of lean NOx catalyst that causes a phenomenon similar to the alkali attack phenomenon. For example, when a catalyst contains, as the NOx trapping component, an alkaline-earth metal element such as strontium (Sr) and barium (Ba), the alkaline-earth metal element causes an attack phenomenon against the honeycomb substrate in a similar way although the attack phenomenon is not so strong as that caused by alkali metal. The present invention can be applied to such a catalyst as well.

According to the present invention, by employing, as the honeycomb substrate, a material that has a low affinity with the NOx trapping component, when a lean NOx catalyst supporting the NOx trapping component thereon in an increased amount is used, it is possible to overcome the problem that a part of trapped NOx is dissociated when the trapped NOx is reduced in the rich or stoichiometric atmosphere.

BRIEF DESCRIPTION OF THE DRAWINGS

Fig. 1 is a graph showing a change of a NOx purification rate when the operation mode is changed over from the lean operation to the stoichiometric operation;

Fig. 2 is a schematic view showing a basic construction of an exhaust gas purifying apparatus according to the present invention;

Fig. 3 is a graph showing results of Test Example 1;

Fig. 4 is a graph showing results of Test Example 2;

Fig. 5 is a graph showing results of Test Example 3;

Fig. 6 shows another embodiment of the present invention and is a schematic view of an exhaust gas purifying apparatus including a pre-catalyst;

Fig. 7 is a graph showing results of Test Example 4 conducted for the exhaust gas purifying apparatus including the pre-catalyst;

Fig. 8 shows still another embodiment of the present invention and is a schematic view of an exhaust gas purifying apparatus including a DPF (Diesel Particulate Filter);

Fig. 9 is a sectional view of the DPF as viewed in the direction of flow of exhaust gas; and

Fig. 10 is a schematic view of an exhaust gas purifying apparatus according to still another embodiment of the present invention, in which layout of the DPF is changed.

DESCRIPTION OF THE PREFERRED EMBODIMENTS

The present invention will be described in detail.

In the following description, an attack phenomenon caused by drift of a NOx trapping component is called an alkali attack for the sake of convenience. Also, a step of temporarily changing over the operation mode to the stoichiometric or rich operation during the lean operation is called a rich spike.

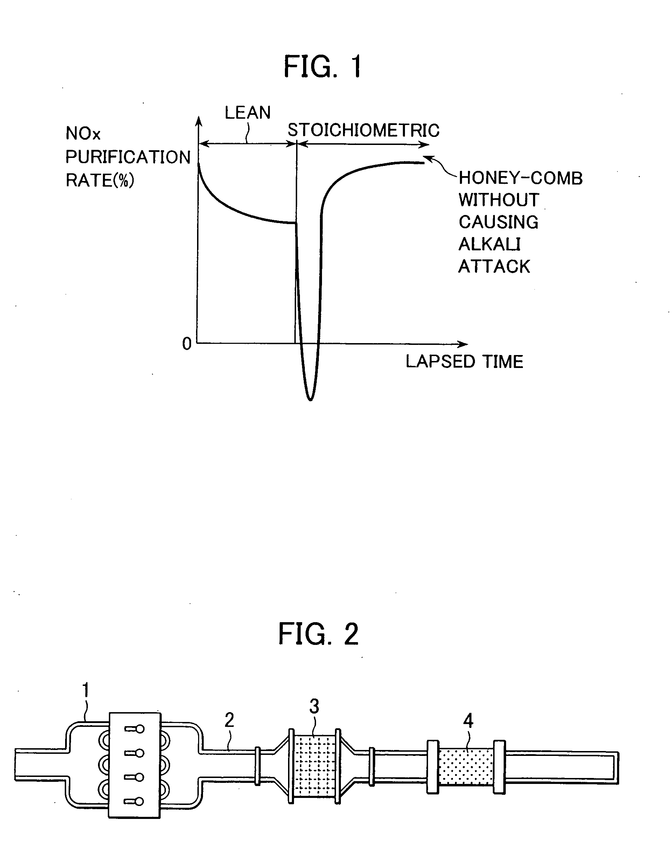

Fig. 1 is a graph showing a time-dependent change of a NOx purification rate, particularly at the time when the operation mode is changed over from the lean operation to the stoichiometric operation, for a lean NOx catalyst in which the occurrence of the alkali attack is suppressed by employing, as a honeycomb substrate, a material that has a low affinity with components of a catalyst layer.

The lean NOx catalyst traps NOx contained in exhaust gas during the lean operation of an internal combustion engine. Because the NOx trapping capability is finite, the NOx purification rate lowers as the amount of NOx trapped by the lean NOx catalyst increases.

When the amount of the trapped NOx reaches a certain value, the operation mode of the internal combustion engine is temporarily changed over to the stoichiometric or rich combustion mode so that the trapped NOx is reduced for purification. In other words, the rich spike is performed.

The rich spike causes, on the lean NOx catalyst, a reaction between the trapped NOx and a reducing gas component in the exhaust gas, whereby the NOx is reduced to $N_2$.

Because the NOx reduction reaction is exothermic, a part of the trapped NOx may dissociate from the lean NOx catalyst while it remains not reduced, and a negative purification rate may occur transiently.

The phenomenon of dissociation of the trapped NOx becomes more noticeable when the exhaust gas is at a high temperature level at which the NOx trapping capability lowers. Also, that phenomenon becomes more noticeable when the amount of the NOx trapping component in the catalyst layer is increased and the lean operation time is prolonged to increase the amount of the trapped NOx.

Thus, even in the case using the honeycomb substrate that does not cause the alkali attack, there is naturally a limit in the amount of an alkali metal, i.e., the NOx trapping component, supported on the catalyst from the viewpoint of avoiding such a transient phenomenon, as described above.

In the present invention, the alkali attack is suppressed by using the honeycomb substrate that has a low affinity with the components of the catalyst layer, and a NOx reducing catalyst is disposed downstream of the lean NOx catalyst to reduce the NOx having dissociated from the lean NOx catalyst, thereby eventually increasing the amount of the NOx trapping component.

Fig. 2 shows a basic construction of an exhaust gas purifying apparatus according to the present invention.

A lean NOx catalyst 3 and a NOx reducing catalyst 4 are disposed in an exhaust passage 2 of an engine 1, i.e., an internal combustion engine, in this order from the upstream side.

The lean NOx catalyst 3 is constituted such that a catalyst layer containing an alkali metal and a noble metal is supported on the honeycomb substrate made of a ceramic that contains, e.g., alumina and calcium oxide as components. The catalyst layer can further contain any of alkaline-earth metals such as magnesium (Mg), calcium (Ca), strontium (Sr) and barium (Ba), and rare-earth metals such as cerium (Ce).

The catalyst layer is supported on the honeycomb substrate by coating or any other suitable method. The catalyst layer can be prepared by causing the above-mentioned catalyst active components to be supported on a support, which is made of at least one of metal oxides selected from among alumina, titanium oxide and zirconium oxide, by impregnation or any other suitable method.

In addition to the above-mentioned ceramic honeycomb, the honeycomb substrate can also be constituted as a metal honeycomb that is manufactured by forming metal foils made of primarily stainless steel into a desired shape or by joining the metal foils to each other and then forming them into the desired shape. When the catalyst layer contains the alkali metal as the NOx trapping component, the alkali attack can be suppressed by using, as the honeycomb substrate, a material that contains no Si.

In the case using the honeycomb substrate which totally does not cause or hardly causes the alkali attack, the amount of the NOx trapping component in the lean NOx catalyst can be increased. On the other hand, such a case raises a problem that the NOx trapping component may drift out of the lean NOx catalyst during the time of the rich spike. The drifted-out NOx trapping component may adhere to the NOx reducing catalyst and may deteriorate the NOx purifying performance of the NOx reducing catalyst.

To cope with the problem that the NOx trapping component drifts out of the lean NOx catalyst, the present invention proposes it to set the linear speed of the exhaust gas flowing through the NOx reducing catalyst comparable to or preferably higher than the linear speed of the exhaust gas flowing through the lean NOx catalyst. By so setting the linear speed of the exhaust gas flowing through the NOx reducing catalyst located on the downstream side, the flow speed of the exhaust gas passing through the NOx reducing catalyst is increased, and therefore the NOx trapping component becomes hard to adhere to the NOx reducing catalyst correspondingly.

The linear speed of the exhaust gas varies with a change in the cross-sectional area of a flow path in the catalyst. For example, the linear speed of the exhaust gas flowing through the catalyst on the downstream side can be increased by changing a catalyst outer diameter such that the cross-sectional area of the catalyst on the downstream side is smaller than the cross-sectional area of the catalyst on the upstream side.

As an alternative, when the catalyst on the upstream side and the catalyst on the downstream side have the same outer diameter, the linear speed of the exhaust gas can be varied by changing a porosity of the honeycomb. When the number of cells per unit area is the same, the porosity reduces as the thickness of a cell wall is increased. The smaller the porosity, the higher is the linear speed of the exhaust gas.

When the amount of the alkali metal or the alkaline-rare metal supported on the lean NOx catalyst exceeds 20 g per bulk volume of the honeycomb, the trapped NOx cannot be often completely purified because of the large amount of the trapped NOx, even if the air-fuel ratio during the time of the rich spike is set to a lower value to increase the NOx reducing capability. The not completely purified NOx is more apt to dissociate. The present invention is, however, free from such a problem because the NOx reducing catalyst is disposed downstream of the lean NOx catalyst and the dissociated NOx is reduced by the NOx reducing catalyst. Thus, the present invention can be said as providing a method that is effective for the case of increasing the amount of the alkali metal or the alkaline-rare metal supported on the lean NOx catalyst over 20 g per bulk volume of the honeycomb, to thereby increase the amount of NOx to be trapped.

Note that the NOx reducing catalyst 4 is preferably made of a three-way catalyst, but it may be a lean NOx catalyst instead.

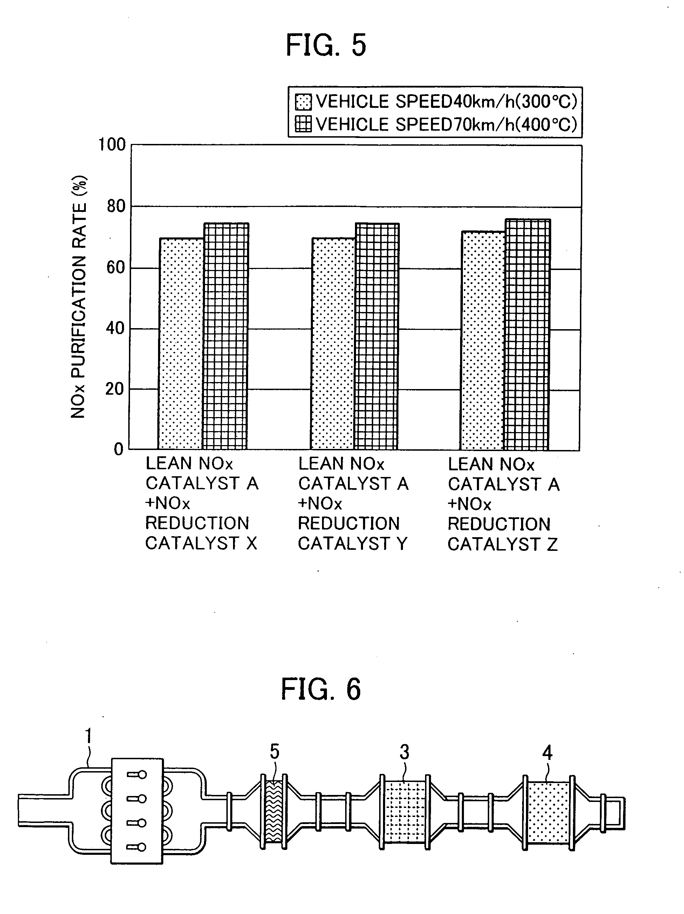

Fig. 6 shows an exhaust gas purifying apparatus according to another embodiment of the present invention in which a pre-catalyst 5 made of a three-way catalyst is disposed in the exhaust passage 2 upstream of the lean NOx catalyst 3. The provision of the pre-catalyst 5 increases the capability of purifying hydrocarbons (HC).

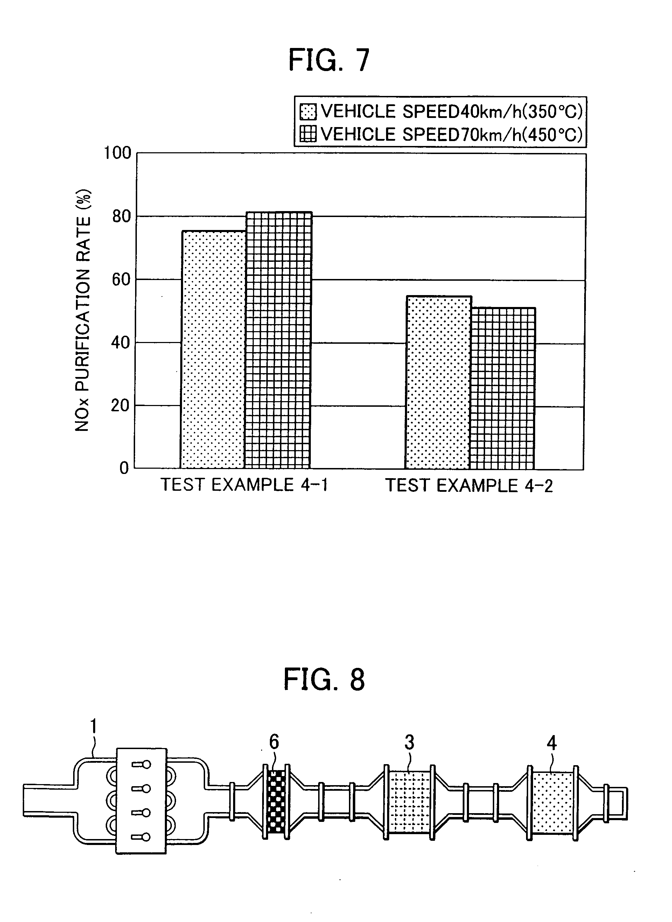

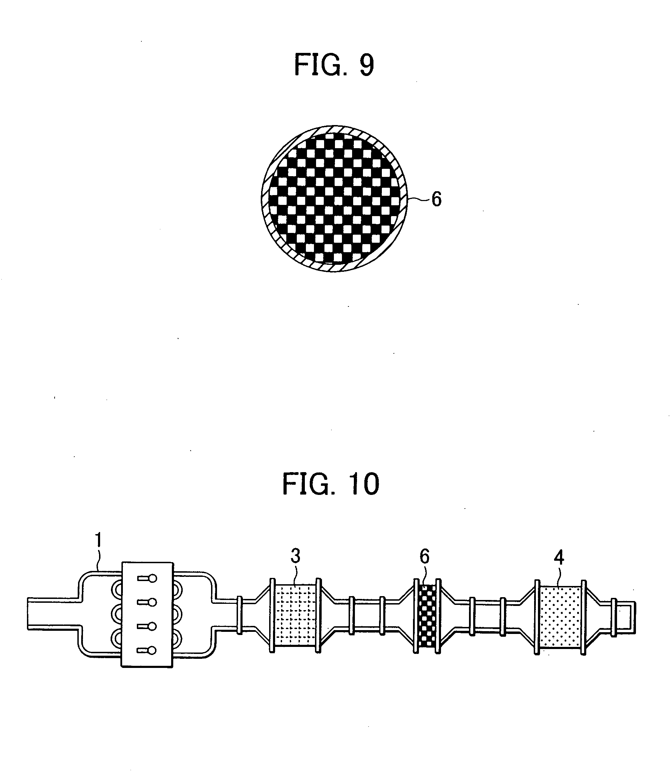

Figs. 8 to 10 show exhaust gas purifying apparatuses according to other embodiments of the present invention in which a filter capable of trapping and removing particulates, i.e., a diesel particulate filter 6 (hereinafter referred to as a "DPF"), is additionally disposed. In the exhaust gas purifying apparatus of Fig. 8, the DPF 6 is disposed upstream of the lean NOx catalyst 3. In the exhaust gas purifying apparatus of Fig. 10, the DPF 6 is disposed between the lean NOx catalyst 3 and the NOx reducing catalyst 4. Fig. 9 shows a cross-section of the DPF 6 in Fig. 8. These embodiments are effective in a diesel engine. Stated another way, since the DPF 6 serves to remove soot contained in diesel exhaust gas, it is possible to avoid a reduction in the NOx purifying performance of the catalyst disposed on the downstream side.

The DPF 6 can be constituted of, e.g., a monolithic honeycomb filter that is formed by alternately sealing off inlets and outlets of a porous cordierite honeycomb. Another practicable example of the DPF 6 is a ceramic fiber laminated filter prepared by wrapping ceramic fibers around a porous tube. Still other practicable examples of the DPF 6 are a filter prepared by forming a metal wire mesh into a hollow cylindrical shape, or a filter prepared by laminating sintered metal sheets one above another.

The arrangement of Fig. 8 can provide an additional advantage that since the particulates are less accumulated in the lean NOx catalyst and the NOx reducing catalyst, both the lean NOx catalyst and the NOx reducing catalyst can be prolonged in service life. The arrangement of Fig. 10 can provide an additional advantage that since the concentration of the exhaust gas is not averaged by the DPF 6 during the time of the rich spike, the rich level is less apt to become shallow and hence the air-fuel ratio is less apt to become high, whereby the trapped NOx can be more easily purged.

[Example]

The present invention will be described in more detail below in connection with an example. In the following example, the lean NOx catalyst had a bulk volume of 0.71 L, and the honeycomb had an outer diameter of 105.7 mm$\phi$ and a length of 81.2 mm. Also, the lean NOx catalyst, the NOx reducing catalyst, and the pre-catalyst were mounted in a test vehicle after being subjected to thermal endurance treatment at 850°C for 50 hours in advance.

(Preparation of Lean NOx Catalyst A)

The honeycomb substrate used in the example was a ceramic honeycomb made of alumina and calcium oxide and having cells in nominal number of 400 cells/inch$^2$ (about 62 cells/cm$^2$). An alumina slurry made of alumina and nitrate acidic alumina was coated on the ceramic honeycomb such that the amount of alumina was 190 g per bulk volume. Then, an alumina coated honeycomb was obtained through steps of drying and firing.

The alumina coated honeycomb was impregnated with a solution of cerium (Ce) nitrate and was subjected to drying at about 100°C and then to firing for 1 hour at about 600°C.

Subsequently, the alumina coated honeycomb was impregnated with a mixed dipping liquid, i.e., a mixed solution of sodium (Na) nitrate, magnesium (Mg) nitrate, titania sol, and dinitrodiammine-platinum (Pt) nitrate, followed by drying at about 100°C and then firing for 1 hour at about 600°C.

With the process described above, a lean NOx catalyst A according to the example of the present invention was obtained in which catalyst active components were supported in amounts of Ce: 27 g, Na: 50 g, Mg: 1.8 g, Ti: 4 g, and Pt: 3 g per bulk volume of the honeycomb.

(Preparation of Lean NOx Catalyst B)

A lean NOx catalyst B according to the example of the present invention was prepared exactly in the same manner as the lean NOx catalyst A except for using, as the honeycomb substrate, a metal honeycomb made of primarily stainless steel and having cells in nominal number of 400 cells/inch$^2$ (about 62 cells/cm$^2$). The amounts of the catalyst active components per bulk volume of the honeycomb were the same as those in the lean NOx catalyst A.

(Preparation of Lean NOx Catalyst C)

A lean NOx catalyst C according to a comparative example was prepared exactly in the same manner as the lean NOx catalyst A except for using, as the honeycomb substrate, a honeycomb made of cordierite and having cells in nominal number of 400 cells/inch$^2$ (about 62 cells/cm$^2$). The amounts of the catalyst active components per bulk volume of the honeycomb were the same as those in the lean NOx catalyst A.

(Preparation of NOx Reducing Catalyst X)

An alumina coated honeycomb having an alumina amount of 100 g per bulk volume of the honeycomb was prepared by coating an alumina slurry on a honeycomb made of cordierite and having cells in nominal number of 400 cells/inch$^2$ (about 62 cells/cm$^2$), and by subjecting the honeycomb to steps of drying and firing. Additionally, the alumina slurry used herein was the same as that used in preparing the lean NOx catalyst A.

The alumina coated honeycomb was impregnated with a solution of cerium (Ce) nitrate, and was subjected to drying at about 100°C and then to firing for 1 hour at about 600°C. Thereafter, the alumina honeycomb was impregnated with a mixed solution of dinitrodiammine-platinum (Pt) nitrate and rhodium (Rh) nitrate, followed by steps of drying and firing.

In such a way, a NOx reducing catalyst X was obtained in which catalyst active components were supported in amounts of Ce: 27 g, Pt: 2 g, and Rh: 0.2 g per bulk volume of the honeycomb.

(Preparation of NOx Reducing Catalyst Y)

A NOx reducing catalyst Y was prepared exactly in the same manner as the NOx reducing catalyst X except for using, as the honeycomb substrate, a honeycomb made of cordierite and having an outer diameter of 86 mmϕ, a length of 122 mm, a bulk volume of 0.71 L, and cells in nominal number of 400 cells/inch$^2$ (about 62 cells/cm$^2$). This NOx reducing catalyst Y had the same volume as the NOx reducing catalyst X, but the honeycomb cross-sectional area of the NOx reducing catalyst Y was 2/3 time that of the NOx reducing catalyst X, namely the linear speed of the exhaust gas in the catalyst Y is 1.5 times that in the catalyst X.

(Preparation of NOx Reducing Catalyst Z)

A NOx reducing catalyst Z was prepared exactly in the same manner as the NOx reducing catalyst X except for using, as the honeycomb substrate, a honeycomb made of cordierite and having an outer diameter of 86 mmϕ, a length of 122 mm, a bulk volume of 0.71 L, and cells in nominal number of 600 cells/inch$^2$ (about 93 cells/cm$^2$). This NOx reducing catalyst Z gave the same linear speed of the exhaust gas as that in the NOx reducing catalyst Y, but it had the number of cells 1.5 times that in the latter.

(Preparation of Pre-Catalyst)

An alumina coated honeycomb having an alumina amount of 100 g per bulk volume of the honeycomb was prepared by coating the same alumina slurry as that used in preparing the lean NOx catalyst A on a honeycomb made of cordierite and having a bulk volume of 0.3 L, and by subjecting the honeycomb to steps of drying and firing.

The alumina coated honeycomb was impregnated with a solution of cerium (Ce) nitrate, and was subjected to drying at about 100°C and then to firing at about 600°C. Thereafter, the alumina honeycomb was impregnated with a mixed solution of dinitrodiammine-platinum (Pt) nitrate, rhodium (Rh) nitrate, and dinitrodiammine-palladium (Pd) nitrate, followed by drying at about 100°C and then firing at about 600°C.

In such a way, a pre-catalyst (three-way catalyst) was obtained in which catalyst active components were supported in amounts of Ce: 27 g, Pt: 1.5 g, Rh: 0.15 g, and Pd: 5 g per bulk volume of the honeycomb.

[Test Example 1]

Test Example 1 was conducted to examine respective NOx purifying performances of the lean NOx catalysts A, B and C.

First, the lean NOx catalyst A was mounted in an exhaust pipe of a lean burn vehicle (test vehicle) having a displacement of 2.0 L.

Then, the test vehicle was held fixed on a chassis dynamometer and was operated to run at a constant speed on condition that the air-fuel (A/F) ratio was set to 20 and the vehicle speed was set to 40 km/h (with the temperature at the catalyst inlet being about 300°C).

During the run, the operation mode of the test vehicle was changed over from the lean burn operation to the rich operation to perform the rich spike. After 1 minute from the changeover to the rich operation, the NOx concentration at an engine outlet (i.e., the NOx concentration at a catalyst inlet) and the NOx concentration at an exhaust pipe outlet (i.e., the NOx concentration at a catalyst outlet) were measured and a NOx purification rate (%) was computed based on the following formula (1):

NOx purification rate (%) = (NOx concentration at engine outlet - NOx concentration at exhaust pipe outlet) + NOx concentration at engine outlet $\times$ 100

A similar test was conducted for the case of running the test vehicle at a constant vehicle speed of 70 km/h (with the temperature at the catalyst inlet being about 400°C) .

Further, those tests were likewise repeated for each of the lean NOx catalysts B and C in place of the lean NOx catalyst A.

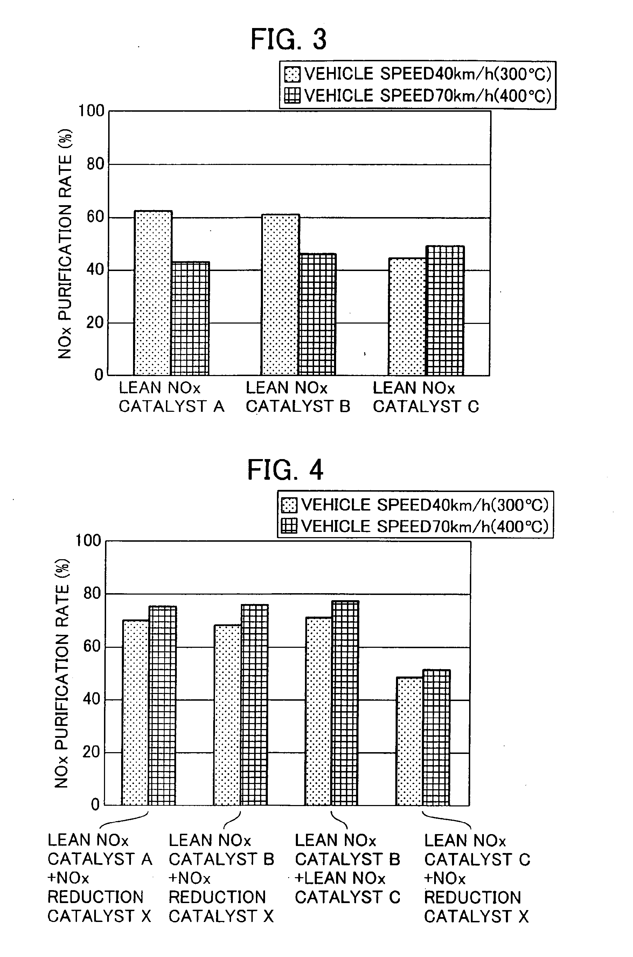

Test results are shown in Fig. 3. When each of the lean NOx catalysts A and B is solely used, high NOx purifying performance in match with its high NOx trapping capability is not obtained. The NOx purifying performance of the lean NOx catalyst C employing the cordierite honeycomb is more inferior to those of the lean NOx catalysts A and B. The reason why the NOx purifying performance of the lean NOx catalyst C is particularly inferior is presumably in that the amount of the alkali metal in the catalyst layer is reduced due to the alkali attack. The honeycomb strength of the lean NOx catalyst C is also reduced due to the alkali attack at an excessive level.

[Test Example 2]

Tests similar to those in Test Example 1 were conducted by disposing the lean NOx catalyst A in the exhaust pipe of the test vehicle on the upstream side, and disposing the NOx reducing catalyst X therein on the downstream side.

Further, similar tests were repeated for each of the lean NOx catalysts B and C in place of the lean NOx catalyst A. The tests were also conducted for the case in which the lean NOx catalyst B was disposed in the exhaust pipe on the upstream side, and the lean NOx catalyst C was disposed therein on the downstream side.

Fig. 4 shows the NOx purifying rates computed based on the above formula (1). Comparing Figs. 3 and 4 with each other, the advantage resulting from the provision of the NOx reducing catalyst can be understood. More specifically, with the arrangement in which the NOx reducing catalyst X or the lean NOx catalyst C is disposed upstream of the lean NOx catalyst A or B, the NOx purifying performance is increased. With the arrangement in which the lean NOx catalyst C is disposed on the upstream side, however, the NOx purifying performance is hardly increased even when the lean NOx catalyst X is disposed on the downstream side. The reason why the arrangements according to the embodiments of the present invention exhibit relatively high NOx purifying performance is presumably in that NOx having dissociated during the time of the rich spike are purified by the NOx reducing catalyst X or the lean NOx catalyst C having the NOx reducing function.

[Test Example 3]

Tests similar to those in Test Example 2 were conducted by disposing the lean NOx catalyst A in the exhaust pipe of the test vehicle on the upstream side, and disposing the NOx reducing catalyst Y or Z therein on the downstream side in place of the NOx reducing catalyst X.

Test results are shown in Fig. 5. Fig. 5 also shows the test results obtained with the combination of the lean NOx catalyst A and the NOx reducing catalyst X in Test

Example 2.

There is no significant difference in the NOx purifying performance among the NOx reducing catalysts X, Y and Z. Accordingly, it is preferable to employ the NOx reducing catalyst Y or Z because the linear speed of the exhaust gas is increased and the alkali metal having drifted out of the lean NOx catalyst is less apt to adhere to the NOx reducing catalyst as compared with the case using the NOx reducing catalyst X.

[Test Example 4]

Tests similar to those in Test Example 1 were conducted by disposing, in the exhaust pipe of the test vehicle, the pre-catalyst 5, the lean NOx catalyst 3 and the NOx reducing catalyst 4 in this order from the upstream side, as shown in Fig. 6.

Fig. 7 shows test results of Test Example 4-1 representing an example of the present invention which employs the pre-catalyst, the lean NOx catalyst A and the NOx reducing catalyst X, and Test Example 4-2 representing a comparative example which employs the pre-catalyst, the lean NOx catalyst C and the NOx reducing catalyst X.

The exhaust gas temperature at the inlet of the lean NOx catalyst was 350°C at the vehicle speed of 40 km/h, and was 450°C at the vehicle speed of 70 km/h.

As seen from Fig. 7, Test Example 4-1 representing the example of the present invention exhibits higher NOx purifying performance than Test Example 4-2 representing the comparative example.

Thus, the present invention is able to overcome the problem that, when the amount of the NOx trapping component in the lean NOx catalyst is increased to enhance the NOx trapping capability, a part of trapped NOx is dissociated during the time of the rich spike and the NOx purifying performance is deteriorates. As a result, the lean operation time can be prolonged and the fuel consumption can be improved.

**Claims**

1. An exhaust gas purifying apparatus for an internal combustion engine, comprising:

   a lean NOx catalyst (3) disposed in an exhaust passage (2) of said internal combustion engine (1), having the function of trapping NOx in a lean atmosphere under coexistence of oxygen, and including a catalyst layer that has the function of reducing the trapped NOx by a reductant in a rich or stoichiometric atmosphere and is supported on a honeycomb substrate having a low affinity with components of said catalyst layer; and
   a NOx reducing catalyst (4) disposed downstream of said lean NOx catalyst (3) and having the function of reducing NOx by a reductant in the rich or stoichiometric atmosphere,

   wherein said NOx reducing catalyst (4) reduces NOx that is dissociated from said lean NOx catalyst (3) when a condition of exhaust gas in said exhaust passage (2) is changed over from a lean condition to a rich or stoichiometric condition.

2. An exhaust gas purifying apparatus for an internal combustion engine according to Claim 1, wherein said lean NOx catalyst (3) contains a NOx trapping component and a NOx reducing component in said catalyst layer.

3. An exhaust gas purifying apparatus for an internal combustion engine according to Claim 1 or 2, wherein said lean NOx catalyst (3) is a three-way catalyst.

4. An exhaust gas purifying apparatus for an internal combustion engine according to at least one of Claims 1 to 3, wherein said lean NOx catalyst (3) contains, as said NOx trapping component, at least one element selected from among alkali metals and alkaline-earth metals, and said honeycomb substrate contains no Si as a component thereof.

5. An exhaust gas purifying apparatus for an internal combustion engine according to at least one of Claims 1 to 4, wherein the NOx trapping component in said lean NOx catalyst (3) contains at least one element selected from among Li, Na, K, Cs, Sr and Ba, and an amount of the NOx trapping component supported on said honeycomb substrate is not smaller than 20 g per bulk volume of said honeycomb substrate.

6. An exhaust gas purifying apparatus for an internal combustion engine according to at least one of Claims 1 to 5, wherein said lean NOx catalyst (3) contains a noble metal as the NOx reducing component.

7. An exhaust gas purifying apparatus for an internal combustion engine according to at least one of Claims 1 to 6, wherein said lean NOx catalyst (3) and said NOx reducing catalyst (4) are set to have a relative relationship therebetween such that a linear speed of the exhaust gas flowing through said NOx reducing catalyst (4) is comparable to or higher than a linear speed of the exhaust gas flowing through said lean NOx catalyst (3).

8. An exhaust gas purifying apparatus for an internal combustion engine according to at least one of Claims 1 to 7, wherein said NOx reducing catalyst (4) is constituted by a honeycomb substrate having a catalyst layer supported thereon, and said honeycomb substrate of said NOx reducing catalyst (4) has a smaller porosity than said honeycomb substrate of said lean NOx catalyst.

9. An exhaust gas purifying apparatus for an internal combustion engine according to at least one of Claims 1 to 8, further comprising a three-way catalyst disposed in said exhaust passage (2) upstream of said lean NOx catalyst (3).

**10.** An exhaust gas purifying apparatus for an internal combustion engine (1), comprising an exhaust gas purifying catalyst and a filter (6) trapping and removing particulates which are disposed in an exhaust passage (2) of said internal combustion engine (1),

wherein said exhaust gas purifying catalyst comprises a lean NOx catalyst (3) having the function of trapping NOx in a lean atmosphere under coexistence of oxygen and including a catalyst layer that has the function of reducing the trapped NOx by a reductant in a rich or stoichiometric atmosphere and is supported on a honeycomb substrate having a low affinity with components of said catalyst layer, and a NOx reducing catalyst (4) having the function of reducing NOx by a reductant in the rich or stoichiometric atmosphere;

said lean NOx catalyst (3) is disposed upstream or downstream of said filter (6), and said NOx reducing catalyst (4) is disposed downstream of said lean NOx catalyst (3) and said filter (6); and

said NOx reducing catalyst (4) reduces NOx that is dissociated from said lean NOx catalyst (3) when a condition of exhaust gas in said exhaust passage (2) is changed over from the lean atmosphere to the rich or stoichiometric atmosphere.

**11.** An exhaust gas purifying apparatus for an internal combustion engine according to Claim 10, wherein said lean NOx catalyst (3) is disposed downstream of said filter (6), and said NOx reducing catalyst (4) is disposed downstream of said lean NOx catalyst (3).

**12.** An exhaust gas purifying apparatus for an internal combustion engine according to Claim 10 or 11, wherein said lean NOx catalyst (3) is disposed upstream of said filter (6), and said NOx reducing catalyst (4) is disposed downstream of said filter (6).

**13.** An exhaust gas purifying apparatus for an internal combustion engine according to at least one of Claims 10 to 12, wherein said lean NOx catalyst (3) contains, as said NOx trapping component, at least one element selected from among alkali metals and alkaline-earth metals, and said honeycomb substrate contains no Si as a component thereof.

**14.** An exhaust gas purifying apparatus for an internal combustion engine according to at least one of Claims 10 to 13, wherein said lean NOx catalyst (3) contains a noble metal as the NOx reducing component.

**15.** An exhaust gas purifying apparatus for an internal combustion engine according to at least one of Claims 10 to 14, wherein said NOx reducing catalyst (4) is a three-way catalyst.

**16.** An exhaust gas purifying apparatus for an internal combustion engine according to at least one of Claims 10 to 15, wherein said lean NOx catalyst (3) and said NOx reducing catalyst (4) are set to have a relative relationship therebetween such that a linear speed of the exhaust gas flowing through said NOx reducing catalyst (4) is comparable to or higher than a linear speed of the exhaust gas flowing through said lean NOx catalyst (3).

**17.** An exhaust gas purifying apparatus for an internal combustion engine according to at least one of Claims 10 to 16, wherein said NOx reducing catalyst (4) is constituted by a honeycomb substrate having a catalyst layer supported thereon, and said honeycomb substrate of said NOx reducing catalyst (4) has a smaller porosity than said honeycomb substrate of said lean NOx catalyst (3).

**18.** An exhaust gas purifying method for use in an internal combustion engine (1) to purify exhaust gas exhausted from said internal combustion engine (1) by an exhaust gas purifying catalyst disposed in an exhaust passage (2), the method comprising the steps of:

trapping NOx contained in the exhaust gas from said internal combustion engine (1), which is operated in a lean atmosphere under coexistence of oxygen, and removing the NOx from the exhaust gas by a lean NOx catalyst (3) having the function of trapping the NOx in a lean atmosphere and including a catalyst layer that has the function of reducing the trapped NOx by a reductant in a rich or stoichiometric atmosphere and is supported on a honeycomb substrate having a low affinity with components of said catalyst layer; and temporarily changing over an operation mode of said internal combustion engine (1) to operation in the rich or stoichiometric atmosphere, and reducing NOx dissociated from said lean NOx catalyst (3) with the changeover of the operation mode by a NOx reducing catalyst (4) having the function of reducing NOx by a reductant in the rich or stoichiometric atmosphere.

**19.** An exhaust gas purifying method for an internal combustion engine according to Claim 18, wherein a linear speed of the exhaust gas flowing through said NOx reducing catalyst (4) is comparable to or higher than a linear speed of the exhaust gas flowing through said lean NOx catalyst (3).

# FIG. 1

NOx PURIFICATION RATE(%)

LEAN　　STOICHIOMETRIC

HONEY-COMB WITHOUT CAUSING ALKALI ATTACK

0　　　　　　　　　　　　LAPSED TIME

# FIG. 2

## FIG. 3

Legend:
▦ VEHICLE SPEED40km/h(300°C)
▦ VEHICLE SPEED70km/h(400°C)

NOx PURIFICATION RATE (%)

LEAN NOx CATALYST A / LEAN NOx CATALYST B / LEAN NOx CATALYST C

## FIG. 4

Legend:
▦ VEHICLE SPEED40km/h(300°C)
▦ VEHICLE SPEED70km/h(400°C)

NOx PURIFICATION RATE (%)

LEAN NOx CATALYST A +NOx REDUCTION CATALYST X

LEAN NOx CATALYST B +NOx REDUCTION CATALYST X

LEAN NOx CATALYST B +LEAN NOx CATALYST C

LEAN NOx CATALYST C +NOx REDUCTION CATALYST X

## FIG. 5

Legend:
- VEHICLE SPEED40km/h(300°C)
- VEHICLE SPEED70km/h(400°C)

NOx PURIFICATION RATE (%)

LEAN NOx CATALYST A +NOx REDUCTION CATALYST X

LEAN NOx CATALYST A +NOx REDUCTION CATALYST Y

LEAN NOx CATALYST A +NOx REDUCTION CATALYST Z

## FIG. 6

# FIG. 7

Legend:
- ▦ VEHICLE SPEED 40km/h (350°C)
- ▦ VEHICLE SPEED 70km/h (450°C)

NOx PURIFICATION RATE (%)

TEST EXAMPLE 4-1    TEST EXAMPLE 4-2

# FIG. 8

EP 1 563 892 A1

# FIG. 9

6

# FIG. 10

1    3    6    4

15

**European Patent Office**

## EUROPEAN SEARCH REPORT

Application Number

EP 05 00 2801

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 273 338 A (DAIMLERCHRYSLER AG) 8 January 2003 (2003-01-08) * column 4, line 45 - column 6, line 2; figure 1 * * column 6, line 45 - line 55 * ----- | 1-19 | B01D53/94 F01N3/08 |
| X | EP 0 915 244 A (MITSUBISHI JIDOSHA KOGYO KABUSHIKI KAISHA) 12 May 1999 (1999-05-12) * column 8, line 31 - line 57 * * column 12, line 40 - column 15, line 2; figure 1 * ----- | 1-9,18, 19 | |
| X | EP 1 027 919 A (FORD GLOBAL TECHNOLOGIES, INC) 16 August 2000 (2000-08-16) * column 4, paragraph 14 * * column 6, line 21; figure 1 * ----- | 1-3,6,18 | |
| A,D | PATENT ABSTRACTS OF JAPAN vol. 1998, no. 11, 30 September 1998 (1998-09-30) & JP 10 165817 A (TOYOTA CENTRAL RES & DEV LAB INC; TOYOTA MOTOR CORP), 23 June 1998 (1998-06-23) * abstract * ----- | 1-19 | TECHNICAL FIELDS SEARCHED (Int.Cl.7) B01D F01N |

The present search report has been drawn up for all claims

| Place of search | Date of completion of the search | Examiner |
|---|---|---|
| Munich | 18 May 2005 | Eijkenboom, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 05 00 2801

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2005

| Patent document cited in search report | | Publication date | Patent family member(s) | | Publication date |
|---|---|---|---|---|---|
| EP 1273338 | A | 08-01-2003 | DE | 10131588 A1 | 23-01-2003 |
| | | | DE | 10164833 A1 | 09-06-2004 |
| | | | EP | 1273338 A1 | 08-01-2003 |
| | | | US | 2003056499 A1 | 27-03-2003 |
| | | | US | 2004139737 A1 | 22-07-2004 |
| EP 0915244 | A | 12-05-1999 | DE | 69816939 D1 | 11-09-2003 |
| | | | DE | 69816939 T2 | 03-06-2004 |
| | | | EP | 0915244 A2 | 12-05-1999 |
| | | | JP | 3329282 B2 | 30-09-2002 |
| | | | JP | 11193713 A | 21-07-1999 |
| EP 1027919 | A | 16-08-2000 | US | 6182443 B1 | 06-02-2001 |
| | | | EP | 1027919 A2 | 16-08-2000 |
| | | | JP | 2000230414 A | 22-08-2000 |
| JP 10165817 | A | 23-06-1998 | NONE | | |

EPO FORM P0459

For more details about this annex : see Official Journal of the European Patent Office, No. 12/82